Europäisches Patentamt

(19) European Patent Office

Office européen des brevets

(11) EP 0 615 984 B1

(12) **EUROPEAN PATENT SPECIFICATION**

(45) Date of publication and mention
of the grant of the patent:
**24.06.1998 Bulletin 1998/26**

(51) Int. Cl.$^6$: **C08F 265/10**, C08L 25/14

(21) Application number: **93301984.6**

(22) Date of filing: **16.03.1993**

(54) **Copolymer emulsions**

Copolymeremulsionen

Emulsions de copolymère

(84) Designated Contracting States:
**BE DE ES FR GB IT NL SE**

(43) Date of publication of application:
**21.09.1994 Bulletin 1994/38**

(73) Proprietor: **UNILEVER PLC**
**London EC4P 4BQ (GB)**

(72) Inventors:
• **Kimpton, Paul T.**
**Daventry, Northands NN11 4JB (GB)**
• **Yamamoto, Toshinari**
**Osaka 562 (JP)**

• **Maruyama, Hisao**
**Osaka 560 (JP)**
• **O'Keefe, Samantha**
**Carshalton, Surrey SM5 2JU (GB)**

(74) Representative:
**Hagemann, Heinrich, Dr.rer.nat., Dipl.-Chem. et**
**al**
**Patentanwälte**
**Hagemann, Braun & Held,**
**Postfach 86 03 29**
**81630 München (DE)**

(56) References cited:
**FR-A- 1 589 793        US-A- 3 235 621**

**Description**

Field of the invention

The invention relates to copolymer emulsions usable for the production of polymer films which exhibit low deformation at elevated temperature.

Background of the invention

Polymer films based on styrene-butyl acrylate copolymers prove to present a high deformation at high temperature. Such a behaviour can be particularly detrimental when these copolymers are used in roofing felt binders, car mouldings or as glass fibre coatings.

Thus, there is a need for a cross-linking agent which reduces the deformation at elevated temperature, i.e. above 100°C.

In other respects, the formaldehyde content of copolymer emulsions is now a major concern and it is thus required that the cross-linking reaction produces as little as possible of formaldehyde.

It is therefore a first goal of the present invention to provide a copolymer emulsion as above described with a cross-linking agent which allows a low deformation at elevated temperature while limiting the release of formaldehyde.

General description of the invention

It is a first object of the present invention to provide a copolymer emulsion containing

i) copolymer particles comprising from 15% to 55% by weight (based on the total monomer units weight of copolymer particles) of styrene units, from 15% to 55% by weight (based on the total monomer units weight of copolymer particles) of butyl acrylate units and up to 12% by weight (based on total monomer units weight of copolymer particles) of methacrylic acid units, methyl methacrylate units, glycidyl methacrylate units, hydroxyethyl acrylate units, n-methylol acrylamide units, and

ii) from 2% to 15% by weight (based on total monomer units weight of copolymer particles) of a colloidal copolymer solution comprising from 20% to 60% by weight (based on the total weight monomer units of the colloidal copolymer solution) of acrylamido glycollic acid units, 20% to 80% by weight (based on the total weight of monomer units of the colloidal copolymer solution) of acrylamide units, and up to 40% by weight (based on the total weight of the monomer units of the colloidal copolymer solution) of hydroxyethyl acrylate units and acrylic acid units.

It is a second object of the present invention to provide a process for the production a copolymer emulsion wherein a monomer combination,

comprising from 15% to 55% by weight (based on the total monomer weight of said monomer combination) of styrene, from 15% to 55% by weight (based on total the monomer weight of said monomer combination) of butyl acrylate and up to 12% by weight (based on total monomer weight of said monomer combination) of methacrylic acid, methyl methacrylate, glycidyl methacrylate, hydroxyethyl acrylate, n-methylol acrylamide, is pre-emulsified, a part of this pre-emulsion being added to from 2% to 15% by weight (based on total monomer weight of said monomer combination) of a colloidal copolymer solution,

comprising from 20% to 60% by weight (based on the total weight monomer units of the colloidal copolymer solution) of acrylamido glycollic acid units, 20% to 80% by weight (based on the total weight of monomer units of the colloidal copolymer solution) of acrylamide units, and up to 40% by weight (based on the total weight of the monomer units of the colloidal copolymer solution) of hydroxyethyl acrylate units and acrylic acid units, a part of an initiator is then added and the system allowed to exotherm, the remainder of the monomer combination and initiator are then added.

It has been found that, in some cases, it is advantageous to post-add the colloidal copolymer solution to an already polymerized latex.

It is therefore a third object of the present invention to provide a process for the production a copolymer emulsion wherein a monomer combination,

comprising from 15% to 55% by weight (based on the total monomer weight of said monomer combination) of styrene, from 15% to 55% by weight (based on total the monomer weight of said monomer combination) of butyl acrylate and up to 12% by weight (based on total monomer weight of said monomer combination) of methacrylic acid, methyl methacrylate, glycidyl methacrylate, hydroxyethyl acrylate, n-methylol acrylamide, is pre-emulsified and a part of an initiator is then added and the system allowed to exotherm, the remainder of the initiator being then added and producing a latex,
from 2% to 15% by weight (based on total monomer weight of said monomer combination) of a colloidal copolymer solution,
comprising from 20% to 60% by weight (based on the total weight monomer units of the colloidal copolymer solution) of acrylamido glycollic acid units, 20% to 80% by weight (based on the total weight of monomer units of the colloidal copolymer solution) of acrylamide units, and up to 40% by weight (based on the total weight of the monomer units of the colloidal copolymer solution) of hydroxyethyl acrylate units and acrylic acid units,
being then added to the latex and heat treated in order to induce cross-linking.

Test procedures and definitions:

i) Colloidal copolymer solution production
Load 100g of deionised water and 100g of Isopropyl alcohol to the reactor and heat to reflux.
5.6g of sodium persulphate are dissolved in 70 g of deionised water.
When the reactor contents reaches reflux temperature a solution of initiator (sodium persulphate in deionised water) and a monomer charge are added concurrently in 3.5 hours and 3 hours respectively. Reflux is maintained throughout the additions.
At the end of the addition, the batch is held at reflux for 1 hour.
The isopropyl alcohol is then removed by vacuum distillation.
When all the Isopropyl alcohol has been removed the batch is cooled to less than 40°C.
For ease of handling, the polymer solution is then partially neutralised with 70g of a solution of sodium hydroxide in water (47%) whilst maintaining the batch temperature at less than 50°C.
After the addition of the sodium hydroxide solution the batch is cooled to less than 30°C and transferred to storage.
Three monomer charges are used:

| - Monomer charge 1: | |
| --- | --- |
| - Hydroxyethyl acrylate | 56 g |
| - Acrylamido Glycollic acid | 168 g |
| - Acrylic acid | 56 g |
| - Deionised water | 1050 g |

| - Monomer charge 2: | |
| --- | --- |
| - Acrylamide solution (30%) | 560 g |
| - Acrylamido Glycollic acid | 56 g |
| - Acrylic acid | 56 g |
| - Deionised water | 100 g |

| - Monomer charge 3: | |
| --- | --- |
| - Acrylamide solution (30%) | 560 g |

(continued)

| - Monomer charge 3: | |
|---|---|
| - Acrylamido Glycollic acid | 112 g |
| - Deionised water | 400 g |

ii) Copolymer emulsion production.

A monomer combination comprising styrene (44.75% by weight based on the total monomer weight of said monomer combination), butyl acrylate (44.75% by weight), methacrylic acid (8% by weight), methyl methacrylate (2% by weight) and glycidyl methacrylate (0.5% by weight) is pre-emulsified using a sodium salt of sulphated nonyl phenol ethoxylate (available under the Trademark Perlankrol from Harcros). Both 0.2% and 0.9% by weight, on monomer weight, of emulsifier were tested.

A part of this pre-emulsion (10% by weight) was added to a colloidal copolymer solution representing 5% by weight of the monomer combination and then heated to 40°C and purged with Nitrogen for 30 minutes.

The total initiator level was 0.7 %by weight (based on the total weight of the monomer combination). The initiator was composed of 66% by weight of ammonium persulfate and 34% by weight of sodium metabisulfite. 60% by weight of the initiator was then added and the system allowed to exotherm. At the maximum exotherm continuous addition of the remainder of the monomer and initiators were began to last 4 and 4.5 hours respectively, the temperature being gradually raised from 40°C to 70°C at a rate of 10°C per 15 minutes.

It was found that the amount of free monomers at the end of the process was always negligible.

iii) Heat resistance.

For measurement of the heat resistance the resultant latices, obtained from the copolymer emulsion production, were diluted by 50% with water and cast into a film at 60°C. The films were cured at 60°C overnight and then post-cured at 150°C for 10 minutes. The films were cut into strips of 12 cm x 1 cm x 0.5 mm and hung in an oven (at room temperature about 20°C) whilst suspending a weight of 63.3 g from one end. The 12 cm strips were suspended from a bar with a clip at each end, the top clip tying the strips to the bar and the bottom clip holding the weight were originally distant by 10 cm. The temperature was then gradually increased in the oven to 200°C in one hour whilst the extension of the films was recorded.

iv) Formaldehyde content in emulsion.

A specific method has been developed based on the following principle.

Formaldehyde reacts with acidified chromotropic acid solution to form a purple coloured monocationic chromogen. The absorbance of the coloured solution is measured using a spectrophotometer at 570 nm and is proportional to the amount of formaldehyde in the solution.

a) Sampling equipment

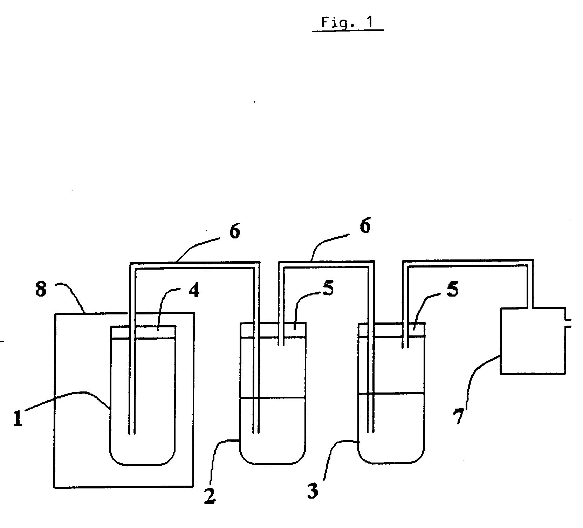

The sampling unit consists of the following equipment and is arranged as shown in the sole Figure.

(1-3)     15.0x2.5 cm test tube (Quickfit MF24/3)
(4)        Twin neck adaptor (Quickfit MF28/3/250)
(5)        Twin neck adaptor (Quickfit MA6/23)
(6)        Sintered glass gas distribution tube (porosity 0)
(7)        Vacuum pump (11/minute)
(8)        Oven (120°C)

b) Analysis equipment

-     10 ml graduated test tubes with stoppers
-     10 ml graduated pipette
-     1 ml graduated pipette
-     1 litre volumetric flask
-     100 ml volumetric flasks
-     Spectrophotometer capable of measuring absorbance at 570 nm
-     10mm glass cells for spectrophotometer

c) Reagents

- Chromotropic acid: Dissolve 0.1 g of 4,5-dihydroxy-2,7 naphtaleneduisulfonic acid disodium salt in redistilled water, dilute to 10 ml.
- Concentrated $H_2SO_4$
- Formaldehyde standard solution "A" (1 mg /ml)
- Formaldehyde standard solution "B" (10 $\mu$g /ml)
- Formaldehyde standard solution "C" (1 $\mu$g /ml)
- Redistilled water

d) Procedure

- Cleaning the equipment.

- Calibration.

  - Pipette 0.5, 1.0, 2.0, 3.0 mls of stand solution "C" and 0.5 and 1.5 mls of standard solution "B" into 10 ml graduated stoppers test tubes.
  - Add 0.3 ml of 1.0% chromotropic acid reagent to each tube.
  - Make up each tube to 4 ml with redistilled water.
  - Into the solution from the previous step, pipette 6 ml of $H_2SO_4$.
  - Allow to cool for at leats 30 minutes.
  - Read absorbance at 570 nm using 1 cm cell.
  - Plot absorbance against $\mu$g of formaldehyde in each tube.

- Sampling.

  - Adjust the oven to 120°C.
  - Fill tubes 2 and 3 with about 18 ml of distilled water each.
  - Weigh accurately a sample of approximately 1 g into tube 1 and rotate the tube so that the sample spreads over the walls of the tube. Immediately connect up with tube 6.
  - Start the vacuum pump to draw air over the sample and through the sintered glass tube.
  - Rotate tube 1 to help the sample to dry evenly.
  - Suck from the sample for at least 1.5 hours.
  - Disconnect tube 1, suck 2-3 ml distilled water from a small beaker in order to wash the tubing, collecting the washing in tube 2.
  - Transfer the absorbed formalin solution and washings from tubes 2 and 3 into two 25 ml volumetric flasks and make up to mark.
  - Pipette 2 ml of the previous 25 ml solutions into 10 ml graduated tubes.
  - Add 0.3 ml of 1.0% chromotropic acid reagent to each tube.
  - Make up to 4.0 ml with redistilled water.
  - In to the solutions from the previous step, pipette 6 ml of $H_2SO_4$.
  - Allow to cool for at leats 30 minutes. Read absorbance at 570 nm using 1 cm cell.
  - Make up a blank and measure absorption.
  - Determine the formaldehyde content of the 10 ml tube from the calibration graph.

- Calculation

$$\text{Formaldehyde content (ppm)} = \frac{C \times 12.5}{W}$$

Wherein C = total weigh of formaldehyde content in sample tubes 2 and 3, as determined from the graph and W = weight of sample taken.

Specific description of the invention

The present invention will be further described in the following examples in which the percentage are by weight unless otherwise specified.

Comparative Examples

Two latices were produced according to the process above described but without any addition of colloidal copolymer solution. The first latex was produced with 0.9% of emulsifier and contained 25.8 ppm of formaldehyde whereas the second one was produced with 0.2% of emulsifier and contained 14.9 ppm of formaldehyde.

The heat resistance of the latex obtained with 0.9% of emulsifier was assessed according to the above described method except that the weight was only 30 g due to the inherent weakness of the film. The results are disclosed in the following table wherein the extension is in millimetres.

| Temperature (°C) | Extension (mm) |
|---|---|
| 60 | 1 |
| 70 | 5 |
| 80 | 9 |
| 90 | 15 |
| 100 | 22 |
| 110 | 34 |
| 120 | 71 |
| 130 | 202 |
| 135 | film broken |

Example 1

Three colloidal copolymer solutions, produced as above described with the three monomer charges 1, 2 and 3, were tested with the following composition:

| Solution 1: | |
|---|---|
| Hydroxyethyl acrylate: | 20 % |
| Acrylamido glycollic acid: | 60 % |
| Acrylic acid: | 20 % |
| Solids contents: 21.5% | |

| Solution 2: | |
|---|---|
| Acrylic acid: | 20 % |
| Acrylamido glycollic acid: | 20 % |
| Acrylamide: | 60 % |
| Solids contents: 31.4% | |

| Solution 3: | |
| --- | --- |
| Acrylamido glycollic acid: | 40 % |
| Acrylamide: | 60 % |
| Solids contents: 25.9% | |

These three colloidal solutions were added to a monomer composition according to the above described method.

The heat resistance of the obtained latices (L1 with solution 1, L2 with solution 2, L3 with solution 3) was assessed according to the above described method and the results are disclosed in the following table wherein the extension is in millimetres.

Comparing the results with those obtained with the comparative examples, it is immediately apparent that the incorporation of the colloidal copolymer solution in a styrene acrylate latex gives excellent resistance to heat.

| Temperature (°C) | L1 Extension | L2 Extension | L3 Extension |
| --- | --- | --- | --- |
| 60 | 1 | 0 | 0 |
| 70 | 2 | 0 | 0 |
| 80 | 3 | 0 | 0 |
| 90 | 4 | 0 | 1 |
| 100 | 5 | 0 | 1 |
| 110 | 5 | 0 | 2 |
| 120 | 7 | 1 | 3 |
| 130 | 10 | 1 | 4 |
| 140 | 17 | 2 | 5 |
| 150 | 33 | 3 | 5 |
| 160 | 63 | 5 | 7 |
| 170 | | 11 | 11 |
| 180 | | 23 | 16 |
| 190 | | | 20 |
| 200 | | | 24 |

Example 2

A colloidal copolymer solution corresponding to the Solution 1 of Example 1 was post-added to an already polymerized latex, as above described, the thermal resistance of this latex L4 was significantly increased when comparing with the latex L1 of Example 1. The results are summarized in the following table.

| Temperature (°C) | L1 Extension | L4 Extension |
| --- | --- | --- |
| 60 | 1 | 0 |
| 70 | 2 | 0 |
| 80 | 3 | 0 |

(continued)

| Temperature (°C) | L1 Extension | L4 Extension |
|---|---|---|
| 90 | 4 | 1 |
| 100 | 5 | 1 |
| 110 | 5 | 2 |
| 120 | 7 | 2 |
| 130 | 10 | 3 |
| 140 | 17 | 5 |
| 150 | 33 | 9 |
| 160 | 63 | |

Example 3

The influence of glycidyl methacrylate (GMA) in the monomer combination was also studied with colloidal solutions corresponding to Solutions 1 and 3 of Example 1.

Two latices were produced (L31 with solution 1 and L33 with solution 3) as above described except that the glycidyl methacrylate content of the monomer combination was increased from 0.5% to 2.5%, the thermal resistance as well at the formaldehyde content of the emulsion were assessed.

The results are summarized in the following table.

| Temperature (°C) | L31 Extension | L33 Extension |
|---|---|---|
| 60 | 0 | 0 |
| 70 | 1 | 1 |
| 80 | 1 | 1 |
| 90 | 2 | 1 |
| 100 | 2 | 1 |
| 110 | 2 | 1 |
| 120 | 3 | 1 |
| 130 | 4 | 1 |
| 140 | 6 | 1 |
| 150 | 9 | 2 |
| 160 | | 2 |
| 170 | | 3 |
| 180 | | 5 |
| 190 | | 6 |
| 200 | | 6 |

When comparing with latices L1 and L3 of Example 1, it is immediately apparent that the thermal resistance is dramatically increased.

The emulsion obtained with solution 3 (latex L33) exhibits a formaldehyde content of 20 ppm and the emulsion obtained with solution 1 (latex L31) exhibits a formaldehyde content of 30ppm. It is therefore completely possible to reach a formaldehyde content of the emulsion comparable to the formaldehyde content of the comparative Examples.

## Claims

1. Copolymer emulsion containing

   i) copolymer particles comprising from 15% to 55% by weight (based on the total monomer units weight of copolymer particles) of styrene units, from 15% to 55% by weight (based on the total monomer units weight of copolymer particles) of butyl acrylate units and up to 12% by weight (based on total monomer units weight of copolymer particles) of methacrylic acid units, methyl methacrylate units, glycidyl methacrylate units, hydroxyethyl acrylate units, n-methylol acrylamide units, and

   ii) from 2% to 15% by weight (based on total monomer units weight of copolymer particles) of a colloidal copolymer solution comprising from 20% to 60% by weight (based on the total weight monomer units of the colloidal copolymer solution) of acrylamido glycollic acid units, 20% to 80% by weight (based on the total weight of monomer units of the colloidal copolymer solution) of acrylamide units, and up to 40% by weight (based on the total weight of the monomer units of the colloidal copolymer solution) of hydroxyethyl acrylate units and acrylic acid units.

2. Process for the production a copolymer emulsion wherein a monomer combination,
   comprising from 15% to 55% by weight (based on the total monomer weight of said monomer combination) of styrene, from 15% to 55% by weight (based on total the monomer weight of said monomer combination) of butyl acrylate and up to 12% by weight (based on total monomer weight of said monomer combination) of methacrylic acid, methyl methacrylate, glycidyl methacrylate, hydroxyethyl acrylate, n-methylol acrylamide,
   is pre-emulsified, a part of this pre-emulsion being added to from 2% to 15% by weight (based on total monomer weight of said monomer combination) of a colloidal copolymer solution,
   comprising from 20% to 60% by weight (based on the total weight monomer units of the colloidal copolymer solution) of acrylamido glycollic acid units, 20% to 80% by weight (based on the total weight of monomer units of the colloidal copolymer solution) of acrylamide units, and up to 40% by weight (based on the total weight of the monomer units of the colloidal copolymer solution) of hydroxyethyl acrylate units and acrylic acid units,
   a part of an initiator is then added and the system allowed to exotherm,
   the remainder of the monomer combination and initiator are then added.

3. Process for the production a copolymer emulsion wherein a monomer combination,
   comprising from 15% to 55% by weight (based on the total monomer weight of said monomer combination) of styrene, from 15% to 55% by weight (based on total the monomer weight of said monomer combination) of butyl acrylate and up to 12% by weight (based on total monomer weight of said monomer combination) of methacrylic acid, methyl methacrylate, glycidyl methacrylate, hydroxyethyl acrylate, n-methylol acrylamide,
   is pre-emulsified and a part of an initiator is then added and the system allowed to exotherm, the remainder of the initiator being then added and producing a latex,
   from 2% to 15% by weight (based on total monomer weight of said monomer combination) of a colloidal copolymer solution,
   comprising from 20% to 60% by weight (based on the total weight monomer units of the colloidal copolymer solution) of acrylamido glycollic acid units, 20% to 80% by weight (based on the total weight of monomer units of the colloidal copolymer solution) of acrylamide units, and up to 40% by weight (based on the total weight of the monomer units of the colloidal copolymer solution) of hydroxyethyl acrylate units and acrylic acid units,
   being then added to the latex and heat treated in order to induce cross-linking.

## Patentansprüche

1. Copolymeremulsion, enthaltend

   i) Copolymerteilchen, umfassend 15 bis 55 Gew.-% (bezogen auf das Gesamtgewicht der Monomereneinheiten der Copolymerteilchen) Styroleinheiten, 15 bis 55 Gew.-% (bezogen auf das Gesamtgewicht der Monomereneinheiten der Copolymerteilchen) Butylacrylateinheiten und bis zu 12 Gew.-% (bezogen auf das Gesamtgewicht der Monomereneinheiten der Copolymerteilchen) Methacrylsäureeinheiten, Methylmethacrylateinheiten, Glycidylmethacrylateinheiten, Hydroxyethylacrylateinheiten, n-Methylolacrylamideinheiten, und

   ii) 2 bis 15 Gew.-% (bezogen auf das Gesamtgewicht der Monomereneinheiten der Copolymerteilchen) einer kollodialen Copolymerlösung, umfassend 20 bis 60 Gew.-% (bezogen auf das Gesamtgewicht der Monomereneinheiten der kolloidalen Copolymerlösung) Acrylamidoglycolsäureinheiten, 20 bis 80 Gew.-% (bezogen auf das Gesamtgewicht der Monomereneinheiten der kolloidalen Copolymerlösung) Acrylamideinheiten und bis zu 40 Gew.-% (bezogen auf das Gesamtgewicht der Monomereneinheiten der kolloidalen Copolymerlösung) Hydroxyethylacrylateinheiten und Acrylsäureeinheiten.

2. Verfahren zur Herstellung einer Copolymeremulsion, wobei eine Monomerenvereinigung,
umfassend 15 bis 55 Gew.-% (bezogen auf das Gesamtgewicht der Monomeren der Monomerenvereinigung) Styrol, 15 bis 55 Gew.-% (bezogen auf das Gesamtgewicht der Monomeren der Monomerenvereinigung) Butylacrylat und bis zu 12 Gew.-% (bezogen auf das Gesamtgewicht der Monomeren der Monomerenvereinigung) Methacrylsäure, Methylmethacrylat, Glycidylmethacrylat, Hydroxyethyl-acrylat, n-Methylolacrylamid,
voremulgiert wird, ein Teil dieser Voremulsion zu 2 bis 15 Gew.-% (bezogen auf das Gesamtgewicht der Monomeren der Monomerenvereinigung) einer kollodialen Copolymerlösung gegeben wird,
die 20 bis 60 Gew.-% (bezogen auf das Gesamtgewicht der Monomereneinheiten der kollodialen Copolymerlösung) Acrylamidoglycolsäureeinheiten, 20 bis 80 Gew.-% (bezogen auf das Gesamtgewicht der Monomereneinheiten der kollodialen Copolymerlösung) Acrylamideinheiten und bis zu 40 Gew.-% (bezogen auf das Gesamtgewicht der Monomereneinheiten der kollodialen Copolymerlösung) Hydroxyethylacrylateinheiten und Acrylsäureinheiten umfaßt,
dann ein Teil eines Initiators zugegeben und dem System erlaubt wird, Wärme abzugeben,
und dann der Rest der Monomerenvereinigung und des Initiators zugegeben werden.

3. Verfahren zur Herstellung einer Copolymeremulsion, wobei eine Monomerenvereinigung,
umfassend 15 bis 55 Gew.-% (bezogen auf das Gesamtgewicht der Monomeren der Monomerenvereinigung) Styrol, 15 bis 55 Gew.-% (bezogen auf das Gesamtgewicht der Monomeren der Monomerenvereinigung) Butylacrylat und bis zu 12 Gew.-% (bezogen auf das Gesamtgewicht der Monomeren der Monomerenvereinigung) Methacrylsäure, Methylmethacrylat, Glycidylmethacrylat, Hydroxyethylacrylat, n-Methylolacrylamid,
voremulgiert wird, dann ein Teil eines Initiators zugegeben wird und dem System erlaubt wird, Wärme abzugeben,
dann der Rest der Initiators zugegeben wird und ein Latex hergestellt wird,
und dann 2 bis 15 Gew.-% (bezogen auf das Gesamtgewicht der Monomeren der Monomerenvereinigung) einer kolloidalen Copolymerlösung,
umfassend 20 bis 60 Gew.-% (bezogen auf das Gesamtgewicht der Monomereneinheiten der kollodialen Copolymerlösung) Acrylamidoglycolsäureeinheiten, 20 bis 80 Gew.-% (bezogen auf das Gesamtgewicht der Monomereneinheiten der kollodialen Copolymerlösung) Acrylamideinheiten und bis zu 40 Gew.-% (bezogen auf das Gesamtgewicht der Monomereneinheiten der kollodialen Copolymerlösung) Hydroxyethylacrylateinheiten und Acrylsäureinheiten,
dem Latex zugegeben werden und wärmebehandelt wird, um eine Vernetzung zu induzieren.

**Revendications**

1. Emulsion de copolymère, contenant

i) des particules de copolymère comprenant 15 % à 55 % en poids (sur la base du poids total des motifs monomériques des particules de copolymère) de motifs styrène, 15 % à 55 % en poids (sur la base du poids total des motifs monomériques des particules de copolymère) de motifs acrylate de butyle et jusqu'à 12 % en poids (sur la base du poids total des motifs monomériques des particules de copolymère) de motifs acide méthacrylique, de motifs méthacrylate de méthyle, de motifs méthacrylate de glycidyle, de motifs acrylate d'hydroxyéthyle, de motifs n-méthylolacrylamide, et
ii) 2 % à 15 % en poids (sur la base du poids total des motifs monomériques des particules de copolymère) d'une solution de copolymère colloïdale comprenant 20 % à 60 % en poids (sur la base du poids total des motifs monomériques de la solution de copolymère colloïdale) de motifs acide acrylamidoglycolique, 20 % à 80 % en poids (sur la base du poids total des motifs monomériques de la solution de copolymère colloïdale) de motifs acrylamide et jusqu'à 40 % en poids (sur la base du poids total des motifs monomériques de la solution de copolymère colloïdale) de motifs acrylate d'hydroxyéthyle et de motifs acide acrylique.

2. Procédé pour la production d'une émulsion de copolymère, dans lequel une association de monomères
comprenant 15 % à 55 % en poids (sur la base du poids total des monomères de ladite association de monomères) de styrène, 15 % à 55 % en poids (sur la base du poids total des monomères de ladite association de monomères) d'acrylate de butyle et jusqu'à 12 % en poids (sur la base du poids total des monomères de ladite association de monomères) d'acide méthacrylique, de méthacrylate de méthyle, de méthacrylate de glycidyle, d'acrylate d'hydroxyéthyle, de n-méthylolacrylamide,

est pré-émulsionnée, une partie de cette pré-émulsion étant ajoutée à une quantité de 2 % à 15 % en poids (sur la base du poids total des monomères de ladite association de monomères) d'une solution de copolymère colloïdale,

comprenant 20 % à 60 % en poids (sur la base du poids total des motifs monomériques de la solution de copolymère colloïdale) de motifs acide acrylamidoglycolique, 20 % à 80 % en poids (sur la base du poids total des motifs monomériques de la solution de copolymère colloïdale) de motifs acrylamide et jusqu'à 40 % en poids (sur la base du poids total des motifs monomériques de la solution de copolymère colloïdale) de motifs acrylate d'hydroxyéthyle et de motifs acide acrylique,

puis une partie d'un initiateur est ajoutée, et on laisse le mélange réactionnel subir une réaction exothermique,

puis le reste de l'association de monomères et de l'initiateur est ajouté.

3. Procédé pour la production d'une émulsion de copolymère, dans lequel une association de monomères

comprenant 15 % à 55 % en poids (sur la base du poids total des monomères de ladite association de monomères) de styrène, 15 % à 55 % en poids (sur la base du poids total des monomères de ladite association de monomères) d'acrylate de butyle et jusqu'à 12 % en poids (sur la base du poids total des monomères de ladite association de monomères) d'acide méthacrylique, de méthacrylate de méthyle, de méthacrylate de glycidyle, l'acrylate d'hydroxyéthyle, de n-méthylolacrylamide,

est pré-émulsionnée et une partie d'un initiateur est ensuite ajoutée, et on laisse le mélange réactionnel subir une réaction exothermique, puis le reste de l'initiateur est ajouté, ce qui produit un latex,

2 % à 15 % en poids (sur la base du poids total des monomères de ladite association de monomères) d'une solution de copolymère colloïdale

comprenant 20 % à 60 % en poids (sur la base du poids total des motifs monomériques de la solution de copolymère colloïdale) de motifs acide acrylamidoglycolique, 20 % à 80 % en poids (sur la base du poids total des motifs monomériques de la solution de copolymère colloïdale) de motifs acrylamide et jusqu'à 40 % en poids (sur la base du poids total des motifs monomériques de la solution de copolymère colloïdale) de motifs acrylate d'hydroxyéthyle et de motifs acide acrylique,

étant ensuite ajoutés au latex et soumis à un traitement thermique afin d'induire une réticulation.

Fig. 1